# EUROPEAN PATENT APPLICATION

(11) **EP 3 041 257 A1**
(43) Date of publication of application: **06.07.2016**
(21) Application number: 14200755.8
(22) Date of filing: 31.12.2014
(51) Int. Cl.: H04R 1/10, H04M 1/73, H04M 1/05

(54) **Monaural wireless headset with touch sensor**

(71) Applicant: GN Netcom A/S, 2750 Ballerup (DK)
(72) Inventor: Sørensen, Michael, 2750 Ballerup (DK)
(74) Representative: Zacco Denmark A/S

(57) **Abstract**

The present invention relates to a monaural wireless headset (1) with a touch sensor that allows determination of whether or not the headset (1) is worn at a user's ear.

The present invention provides a monaural wireless headset (1) comprising a housing (2) with a main body (3) and a microphone boom (4), a microphone, a wireless transceiver, a speaker driver, an electrode (11), a sensor unit and a battery. The monaural wireless headset (1) is adapted to be arranged at an ear of a user in a wearing position wherein at least a portion of the surface of the housing (2) touches the pinna (21) of the ear and wherein the microphone boom (4) at least partly extends outside the pinna (21) towards the user's mouth. The microphone is comprised by the microphone boom (4) and is adapted to receive a voice signal from the user and provide a microphone signal to the wireless transceiver in dependence on the voice signal when the monaural wireless headset (1) is in the wearing position. The wireless transceiver is adapted to transmit a wireless output signal in dependence on the microphone signal. The wireless transceiver is further adapted to receive a wireless input signal and provide an audio output signal to the speaker driver in dependence on the wireless input signal. The speaker driver is arranged and adapted to transmit a sound signal into the ear in dependence on the audio output signal when the monaural wireless headset (1) is in the wearing position. The electrode (11) is arranged to abut a portion of the pinna (21) when the monaural wireless headset (1) is in the wearing position. The sensor unit is adapted to determine whether the electrode (11) touches the user's body and to control one or more functions of the headset (1) in dependence on the determination, and the battery is adapted to provide electric power to the wireless transceiver, the speaker driver and the sensor unit.

The monaural wireless headset (1) is characterized in that the electrode (11) is arranged such that the headset (1) cannot be placed on a plane surface with the electrode (11) touching the plane surface, regardless of the orientation of the headset (1).

The special arrangement of the electrode (11) reduces the risk of the sensor unit falsely determining a touching of the electrode (11) when the headset (1) rests on a plane surface, such as e.g. a desktop or the like.

## Description

### TECHNICAL FIELD

The present invention relates to a monaural wireless headset with a touch sensor.

### BACKGROUND ART

In the prior art, monaural wireless headsets are known that are connectable to a mobile phone by means of a Bluetooth connection. Known monaural wireless headsets typically comprise a housing containing a rechargeable battery, one or more microphones and the headset electronics. A speaker driver may be mounted in a portion of a main body of the housing that has a shape enabling it to extend into the concha of the user's ear when worn. In some headsets, one or more of the microphones are arranged in a microphone boom extending from the main body towards the user's mouth.

It is further known to provide various sensors in a headset in order to allow the headset to determine whether the headset is worn in/at the user's ear and to activate one or more functions in this state.

### DISCLOSURE OF INVENTION

It is an object of the present invention to provide a monaural wireless headset with a touch sensor that allows a reliable determination of whether or not the headset is worn at the user's ear. This and other objects of the invention are achieved by the invention defined in the independent claims and further explained in the following description. Further objects of the invention are achieved by embodiments defined in the dependent claims and in the detailed description of the invention.

Within this document, the singular forms "a", "an", and "the" are intended to include the plural forms as well (i.e. to have the meaning "at least one"), unless expressly stated otherwise. Likewise, the term "any" is intended to include both the singular and the plural form, unless expressly stated otherwise. Correspondingly, the terms "has", "includes", "comprises", "having", "including" and "comprising" specify the presence of respective features, operations, elements and/or components, but do not preclude the presence or addition of further entities. The term "and/or" generally includes any possible combination of one or more of the associated items. Steps or operations of any method disclosed herein need not be performed in the order disclosed, unless this is expressly stated.

### BRIEF DESCRIPTION OF THE DRAWINGS

The invention will be explained in more detail below in connection with preferred embodiments and with reference to the drawings in which:
FIG. 1 shows a first embodiment of a monaural wireless headset according to the invention, and
FIG. 2 shows the headset of FIG. 1 in an intended wearing position.

The figures are schematic and simplified for clarity, and they just show details essential to understanding the invention, while other details may be left out. Where practical, like reference numerals or literal identifiers are used for identical or corresponding parts.

### MODE(S) FOR CARRYING OUT THE INVENTION

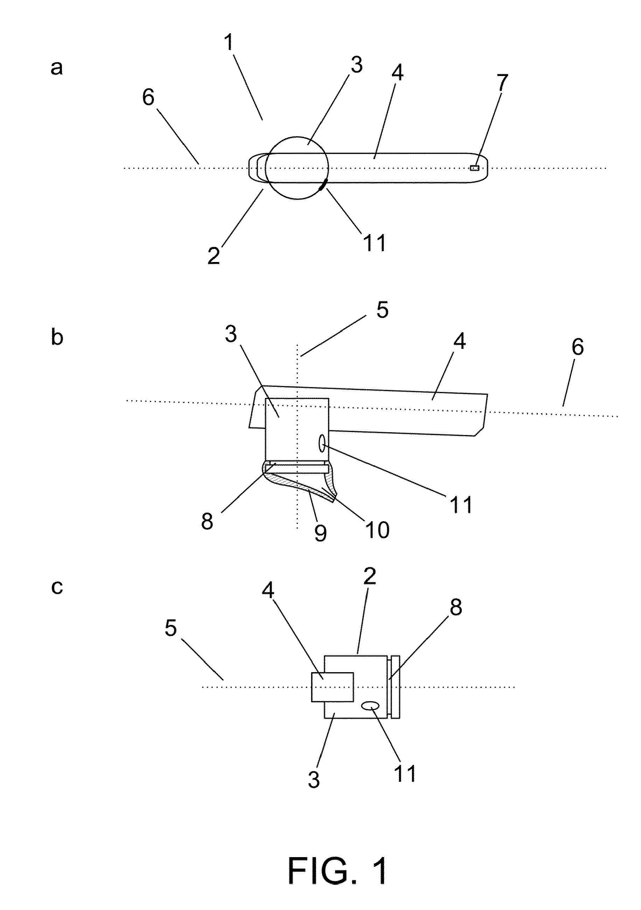

FIGs. 1a, 1b and 1c show orthogonal views of a monaural wireless headset 1. In FIG. 1a, the monaural wireless headset 1 is shown as viewed from the side facing laterally outwards when the headset 1 is worn at a user's right-hand ear, while FIG. 1b shows a bottom view of the monaural wireless headset 1 and FIG. 1c shows a front view of the monaural wireless headset 1.

The monaural wireless headset 1 comprises a housing 2 with a main body 3 and a microphone boom 4. The main body 3 is substantially cylindrical with a substantially laterally oriented cylinder axis 5, and the microphone boom 4 extends across the axially outer end of the main body 3 forwards towards the user's mouth along a boom axis 6 approximately perpendicular to the cylinder axis 5. Although shown horizontal, the boom axis 6 will typically extend at a downwards angle of about 15-25° when the headset 1 is worn correctly. The general design of the housing 2 is based primarily on two ideal design elements, namely a cylinder defining the substantial shape of the main body 3 and a rod defining the substantial shape of the microphone boom 4. The two ideal design elements 3, 4 intersect and thus share a common volume within the housing 2. A circuit board (not shown) is arranged within the microphone boom 4 and extends through a length portion of the microphone boom 4 and the common volume of the ideal design elements 3, 4. A microphone (not shown) with a microphone inlet 7 is arranged near the mouth end or front end of the microphone boom 4. The microphone inlet 7 acoustically connects the environment with a sound inlet of the microphone such that a voice signal from the user may reach the microphone when the monaural wireless headset 1 is worn in the wearing position. A wireless transceiver (not shown) is arranged in the microphone boom 4 along a major portion thereof. The main body 3 comprises a cylindrically wound lithium-ion rechargeable battery (not shown) and is arranged with its cylinder axis substantially equal to the cylinder axis 5 of the main body 3. The generally circular cross section of the laterally inner portion of the main body 3 allows the user to easily rotate the housing 2 about the cylinder axis 5 when the headset 1 is in the ear and thus adjust the downwards angle of the microphone boom 4 to fit personal preferences without causing any discomfort.

Near its laterally inner end, the cylinder surface of the main body 3 has an annular groove 8 for detachably receiving a corresponding rim of a resilient earbud 9, which FIG. 1b shows a section through. The earbud 9 has a channel 10 that acoustically connects a sound outlet of a speaker driver (not shown) with the environment such that a sound signal provided by the speaker driver may reach the user's ear canal when the monaural wireless headset 1 is worn in the wearing position. The circular cross section of the laterally inner portion of the main body 3 and the annular groove 8 allow the user to manually rotate the earbud 9 about the cylinder axis 5 of the main body 3 and thus adjust the fit. The earbud 9 may further comprise an elastic support member (not shown) extending approximately perpendicularly to the main body axis 5 opposite the sound channel 10 and having a shape, like e.g. a hook, a ring or a fin, and an elasticity allowing it to apply a pressure onto a portion of the concha, preferably onto a rear portion of the concha, in order to support or maintain the monaural wireless headset 1 in the wearing position.

An electrode 11 for a capacitive touch sensor is arranged at the cylinder surface of the main body 3. The electrode 11 is arranged such that the headset 1 cannot be placed on a plane surface with the electrode 11 touching the plane surface, regardless of the orientation of the headset 1. The electrode 11 is connected to a sensor unit (not shown) comprised by the headset 1, and the sensor unit is adapted to determine whether or not the electrode 11 touches the body of a user and to control one or more functions of the headset 1 in dependence of this determination. The special arrangement of the electrode 11 reduces the risk of the sensor unit falsely determining a touching of the electrode 11 when the headset 1 rests on a plane surface, such as e.g. a desktop or the like. Preferably, the electrode 11 is arranged such that the minimum distance between the electrode 11 and any such plane surface is at least 1 mm, more preferably at least 2 mm and even more preferably at least 3 mm. The electrode 11 may further preferably be arranged such that it cannot touch the surface of any solid spherical object with a radius of 5 cm or more. This further reduces the risk of falsely determined touches when the headset 1 is e.g. carried in a hip pocket. More preferably, the electrode 11 may be arranged such that it cannot touch the surface of any solid spherical object with a radius of 3 cm or more, or even more preferably, any solid spherical object with a radius of 1 cm or more. The shown location of the electrode 11 at the main body 3 is only one possibility for such arrangements. The electrode 11 may instead, at least partly, be arranged at the microphone boom 4 and/or at other portions of the housing 2. In addition to reducing false detections, the special arrangement of the electrode 11 may help prevent damage to the electrode 11 and/or components attached to the electrode 11. Such damage may e.g. be caused by electric charges or external mechanical forces acting on the headset 1.

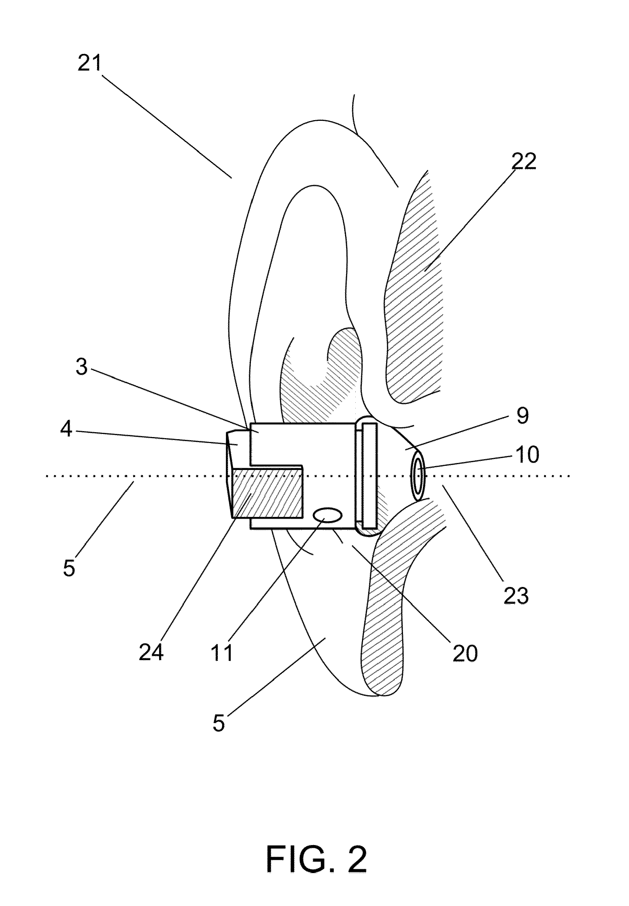

FIG. 2 shows a frontal section of a typical right-hand pinna 21 of a human with the monaural wireless headset 1 of FIG. 1 arranged in its intended wearing position. The section plane intersects tissue and cartilaginous parts of the pinna 21 as indicated by the shaded areas 22 as well as the ear canal of which only the entrance 23 is shown. Since the shape of the pinna 21 is individual for each user, the actual wearing position may deviate from the shown intended wearing position. The main body 3 lies entirely behind the section plane with its cylinder axis 5 oriented horizontally. The section plane intersects the microphone boom 4 where it protrudes forwards towards the user's mouth as indicated by the shaded area 24. The microphone boom 4 extends forwards with a downwards angle, and with an outwards offset that allows it to extend past the tragus (not shown) and thus extend outside the pinna 21 without causing discomfort to the user. The earbud 9 is shown as a transparent body. Its channel 10 leads sound output from the speaker driver forwards and inwards into the opening 23 of the ear canal. The electrode 11 is facing downwards and forwards and may thus abut the tragus, which would obscure the electrode 11 if shown. Since the tragus and the antitragus (not shown) are features of the ear that have rather small radii and further typically are close to an inserted headset 1, the electrode 11 may preferably be arranged such that it abuts one of these ear features when the headset 1 is in its wearing position. The housing 2 may be provided with surface features, such as e.g. ridges, furrows, dents or bulges, in order to achieve this while at the same time ensuring that plane surfaces and/or spherical objects cannot touch the electrode 11 as described further above.

The monaural wireless headset 1 described above may preferably function and be operated like a conventional monaural wireless headset, and unless otherwise stated, the following description may apply to the above headset as well as to further embodiments constituting variations of the monaural wireless headsets 1 described above.

The microphone is preferably adapted to receive a voice signal from the user and provide a microphone signal to the wireless transceiver in dependence on the voice signal when the monaural wireless headset 1 is in the wearing position. The wireless transceiver is preferably adapted to transmit a wireless output signal, e.g. to a mobile phone (not shown) through a Bluetooth connection, in dependence on the microphone signal. The wireless transceiver is further preferably adapted to receive a wireless input signal, e.g. from a mobile phone (not shown) through a Bluetooth connection, and provide an audio output signal to the speaker driver in dependence on the wireless input signal. The speaker driver is preferably arranged and adapted to transmit a sound signal into the ear of the user in dependence on the audio output signal when the monaural wireless headset 1 is in the wearing position, and the rechargeable battery is preferably adapted to provide electric power to headset components, such as e.g. the microphone, the wireless transceiver, the speaker driver and/or the sensor unit.

The monaural wireless headset 1 may preferably further comprise one or more control elements for controlling functions of the headset 1, such as e.g. a power switch for switching the headset 1 on and off, an answer control for accepting incoming phone calls, a reject control for rejecting incoming phone calls, a volume control for changing the sound output level of the speaker driver, a mute control for muting the microphone, a charging connector and a charging circuit for charging the rechargeable battery and/or one or more status indicators for indicating a device status, such as e.g. a power status, a call status and/or a wireless-connection status of the headset 1. Such functions may instead or additionally be controlled by the sensor unit in dependence on determining whether or not the electrode 11 touches the user's body. The sensor unit may e.g. power up the wireless transceiver or portions hereof and/or otherwise activate these when it detects that the electrode 11 touches the user's body and/or power these down or otherwise deactivate these when it detects that the electrode 11 does not touch the user's body.

The headset 1 may comprise further electrodes intended to abut the user's ear when the headset 1 is in the wearing position. If so, at least one of the functions controlled by the sensor unit may preferably be controlled in dependence on the electrode 11 being touched and not in dependence on any of the further electrodes being touched, except where such further electrodes are arranged similar to the special arrangement of the electrode 11 and thus protected against accidental touching and/or damage. The electrode 11 may be used for further purposes, such as e.g. as an electrode for charging the battery of the headset 1 and/or as a magnetic element for holding the headset 1 in a cradle or the like.

The wireless transceiver may be adapted to connect to an external device, such as e.g. a mobile phone, a personal computer, a headset base station, a media player or the like through a wireless connection, which may e.g. be a Bluetooth connection, a DECT connection, a Wi-Fi connection or any other suitable wireless connection, and the wireless transceiver preferably comprises a corresponding antenna and corresponding encoders and decoders for the wireless signals.

The monaural wireless headset 1 may preferably comprise one or more further microphones, e.g. comprised by the microphone boom 4 and/or the main body 3, and each being adapted to provide a further microphone signal to the wireless transceiver in dependence on the voice signal and/or an acoustic signal from the environment when the monaural wireless headset 1 is in the wearing position, and the wireless transceiver may further be adapted to transmit the wireless output signal in dependence on the one or more further microphone signals. The wireless transceiver may for instance apply any known signal processing to the microphone signals, such as e.g. beamforming, frequency shaping, noise reduction, echo cancelling or the like. The monaural wireless headset 1 may for instance comprise a second microphone (not shown) with a sound inlet acoustically connected to a microphone inlet located on the microphone boom 4 about 11 mm further rearwards along the boom axis 6, and the wireless transceiver may combine the microphone signals from the first microphone and the second microphone into a directional microphone signal that emphasizes the user's voice over environment noise in the transmitted wireless output signal. The wireless transceiver may alternatively or additionally apply any known signal processing to the received wireless input signal and provide the audio output signal to the speaker driver and/or the wireless output signal in dependence on the processed wireless input signal and/or one or more microphone signals.

In other embodiments, the shapes of the monaural wireless headset 1 or of the housing 2 may deviate from the ones disclosed above. Furthermore, the headset 1 may be manufactured in a mirrored version to fit the left-hand ear of a user. Also, the microphone boom 4 may be straight, curved and/or provided with one or more bends along its length.

In any embodiment, the monaural wireless headset 1, and in particular the wireless transceiver and/or the sensor unit, preferably comprises one or more electronic circuits, such as e.g. analog circuits, digital circuits, microprocessors, signal processors or the like, adapted to perform the described operations as is already known for similar devices of the prior art. Such electronic circuits are preferably implemented as digital circuits operating on digital signals, but any portions hereof may be implemented as analog circuits operating on analog signals. Where necessary, any of the electronic circuits may comprise analog-to-digital and/or digital-to-analog converters. Functional blocks of digital circuits may be implemented in hardware, firmware or software, or any combination hereof. Digital circuits may perform the functions of multiple functional blocks in parallel and/or in interleaved sequence, and functional blocks may be distributed in any suitable way among multiple hardware units, such as e.g. signal processors, microcontrollers and other integrated circuits.

The detailed description given herein and the specific examples indicating preferred embodiments of the invention are intended to enable a person skilled in the art to practice the invention and should thus be seen mainly as an illustration of the invention. The person skilled in the art will be able to readily contemplate further applications of the present invention as well as advantageous changes and modifications from this description without deviating from the scope of the invention. The mere mentioning of such changes or modifications herein is meant to be non-limiting for the scope of the invention.

The invention is not limited to the embodiments disclosed herein, and the invention may be embodied in other ways within the subject-matter defined in the following claims. As an example, features of the described embodiments may be combined arbitrarily, e.g. in order to adapt the devices according to the invention to specific requirements or uses.

Reference numerals and literal identifiers that appear in brackets in the claims are intended to be non-limiting for their scope.

## Claims

1. A monaural wireless headset (1) comprising a housing (2) with a main body (3) and a microphone boom (4), a microphone, a wireless transceiver, a speaker driver, an electrode (11), a sensor unit and a battery, the monaural wireless headset (1) being adapted to be arranged at an ear of a user in a wearing position wherein at least a portion of the surface of the housing (2) touches the pinna (21) of the ear and wherein the microphone boom (4) at least partly extends outside the pinna (21) towards the user's mouth, the microphone being comprised by the microphone boom (4) and being adapted to receive a voice signal from the user and provide a microphone signal to the wireless transceiver in dependence on the voice signal when the monaural wireless headset (1) is in the wearing position, the wireless transceiver being adapted to transmit a wireless output signal in dependence on the microphone signal, the wireless transceiver further being adapted to receive a wireless input signal and provide an audio output signal to the speaker driver in dependence on the wireless input signal, the speaker driver being arranged and adapted to transmit a sound signal into the ear in dependence on the audio output signal when the monaural wireless headset (1) is in the wearing position, the electrode (11) being arranged to abut a portion of the pinna (21) when the monaural wireless headset (1) is in the wearing position, the sensor unit being adapted to determine whether the electrode (11) touches the user's body and to control one or more functions of the headset (1) in dependence on the determination and the battery being adapted to provide electric power to the wireless transceiver, the speaker driver and the sensor unit,
**characterised in that** the electrode (11) is arranged such that the headset (1) cannot be placed on a plane surface with the electrode (11) touching the plane surface, regardless of the orientation of the headset (1).

2. A monaural wireless headset according to claim 1 and wherein the electrode (11) is arranged such that the headset (1) cannot be placed on a plane surface with the electrode (11) having a distance less than 1 mm from the plane surface, regardless of the orientation of the headset (1).

3. A monaural wireless headset according to claim 2 and wherein the electrode (11) is arranged such that the headset (1) cannot be placed on a plane surface with the electrode (11) having a distance less than 2 mm from the plane surface, regardless of the orientation of the headset (1).

4. A monaural wireless headset according to claim 3 and wherein the electrode (11) is arranged such that the headset (1) cannot be placed on a plane surface with the electrode (11) having a distance less than 3 mm from the plane surface, regardless of the orientation of the headset (1).

5. A monaural wireless headset according to any preceding claim, wherein the electrode (11) is arranged such that the electrode (11) cannot touch the surface of any solid spherical object with a radius of 5 cm or more.

6. A monaural wireless headset according to claim 5, wherein the electrode (11) is arranged such that the electrode (11) cannot touch the surface of any solid spherical object with a radius of 3 cm or more.

7. A monaural wireless headset according to claim 6, wherein the electrode (11) is arranged such that the electrode (11) cannot touch the surface of any solid spherical object with a radius of 1 cm or more.

8. A monaural wireless headset according to any preceding claim, wherein the electrode (11) is arranged such that the electrode (11) abuts the tragus of the ear when the monaural wireless headset (1) is in the wearing position.

9. A monaural wireless headset according to any preceding claim, wherein the electrode (11) is arranged such that the electrode (11) abuts the antitragus of the ear when the monaural wireless headset (1) is in the wearing position.

10. A monaural wireless headset according to any preceding claim, wherein the sensor unit is adapted to activate at least one function of the headset (1) when it determines that electrode (11) touches the user's body.

11. A monaural wireless headset according to any preceding claim, wherein the sensor unit is adapted to deactivate at least one function of the headset (1) when it determines that electrode (11) does not touch the user's body.

12. A monaural wireless headset according to any preceding claim and comprising one or more further electrodes arranged to abut the user's ear when the headset (1) is in the wearing position, and wherein the sensor unit is adapted to control at least one function of the headset (1) in dependence on the electrode (11) being determined to touch the user's body and not in dependence on any of such further electrodes being determined to touch the user's body.
